# EUROPEAN PATENT APPLICATION

(11) **EP 4 776 350 A1**
(43) Date of publication of application: **15.07.2026**
(21) Application number: 25185631.6
(22) Date of filing: 26.06.2025
(51) Int. Cl.: H01M 4/66, H01M 4/131, H01M 4/1391, H01M 4/62, H01M 10/0525, H01M 10/0562, H01M 10/0585

(54) **CATHODE FOR ALL-SOLID-STATE BATTERY, ALL-SOLID-STATE BATTERY INCLUDING THE SAME, AND METHOD FOR MANUFACTURING THEREOF**

(30) Priority: 14.01.2025 KR 20250005168
(71) Applicant: SAMSUNG SDI CO., LTD., Yongin-si, Gyeonggi-do 17084 (KR)
(72) Inventor: LEE, Won Gi, 17084 Yongin-si, Gyeonggi-do (KR); CHOI, Jinkyu, 17084 Yongin-si, Gyeonggi-do (KR); KIM, Jinhee, 17084 Yongin-si, Gyeonggi-do (KR); YOU, Hoseon, 17084 Yongin-si, Gyeonggi-do (KR); KANG, Dongwoo, 17084 Yongin-si, Gyeonggi-do (KR)
(74) Representative: Michalski Hüttermann & Partner mbB

(57) **Abstract**

The present disclosure relates to a positive electrode for an all-solid-state battery. The present disclosure includes a positive electrode current collector, and a positive electrode active material layer on the positive electrode current collector. The positive electrode current conductor includes a main body section and a positive electrode tab protruding in one direction from the main body section. The positive electrode active material layer includes a first layer provided on the main body section, and a second layers on the first layer. At least one of the first and second layers includes a positive electrode active material, a solid electrolyte, and a binder. The binder content of the first layer is greater than the binder content of the second layer. The second layer includes a first region adjacent to the positive electrode tab, and a second region which remains after excluding the first region.

## Description

### CROSS-REFERENCE TO RELATED APPLICATION

The present application claims priority to Korean Patent Application No. 10-2025-0005168, filed on January 14, 2025 in the Korean Patent Office, the entire content of which is hereby incorporated by reference.

### BACKGROUND

The present disclosure relates to an all-solid-state battery.

Due to industrial demands, the development of batteries with high energy density and stability is pursued. For example, lithium-ion batteries are commercialized not only in the fields of information-related devices and communication devices, but also in the automotive industry. In the automotive industry, safety is typically important as it is directly related to the safety of human lives.

In recent years, an all-solid-state battery in which an electrolyte solution is replaced with a solid electrolyte has been proposed. The use of no combustible organic dispersion medium in the all-solid-state battery can substantially reduce the possibility of fire or explosion even when a short circuit occurs. Therefore, such an all-solid-state battery can have significantly higher stability than a lithium-ion battery using an electrolytic solution.

### SUMMARY

Examples of the present disclosure may improve the electrochemical balance of the cathode for all-solid-state battery by adjusting the multilayer electrode structure and composition. Also, the present disclosure may enhance cycle life characteristics.

The present disclosure may reduce or minimize resistance and reduce or prevent irreversible lithium deposition by improving or optimizing the electrode design.

An example embodiment of the present disclosure may include a positive electrode for an all-solid-state battery, including a positive electrode current collector, and a positive electrode active material layer on the positive electrode current collector.

The positive electrode current collector may include a main body section and a positive electrode tab protruding in one direction from the main body section.

The positive electrode active material layer may include a first layer on the main body section, and a second layer on the first layer. Each of the first and second layers may include a positive electrode active material, a solid electrolyte, and a binder.

The binder content of the first layer may be greater than the binder content of the second layer.

The second layer may include a first region adjacent to the positive electrode tab and a second region, which is the remainder excluding the first region, the binder content in the first region may be greater than the binder content in the second region, and an area ratio of the first region to the second region may be in a range of ≥ 1:9 to ≤ 4:6.

An example embodiment of the present disclosure may include a method for manufacturing a positive electrode for an all-solid-state battery, including forming a first active material region on a metal substrate; forming a second active material region and a third active material region on the first active material region, wherein the second and the third active material regions are arranged side by side in a width direction of the metal substrate; forming a positive electrode sheet by drying the first, second, and third active material regions, wherein each of the first, second and third active material region includes a positive electrode active material, a solid electrolyte, and a binder; and forming a positive electrode composite layer by cutting the positive electrode sheet.

The positive electrode sheet may include a first non-coated region formed on one side thereof, the second active material region may be adjacent to the first non-coated region in the width direction.

The positive electrode composite layer may include an electrode tab formed by cutting the non-coated region, a first positive electrode active material layer including the first active material region, and a second positive electrode active material layer including the second and third active material regions.

A binder content of the second active material region may be less than a binder content in the first active material region, and a binder content the third active material region may be less than the binder content in the second active material region.

An example embodiment of the present disclosure may include an all-solid-state battery including a positive electrode; a negative electrode including a negative electrode current collector and a negative electrode coating layer on the negative electrode current collector; and a solid electrolyte layer between the positive electrode and the negative electrode.

### BRIEF DESCRIPTION OF DRAWINGS

FIGS. 1 and 2 are plan views of a positive electrode for an all-solid-state battery according to an example embodiment of the present disclosure.
FIG. 3 is a cross-sectional view taken along line A-A' in FIG. 1.
FIG. 4 is an enlarged view of the region M in FIG. 3.
FIG. 5 is a cross-sectional view of a positive electrode for an all-solid-state battery according to an example embodiment of the present disclosure.
FIGS. 6 and 7 are cross-sectional views of an all-solid-state battery unit cell according to an example embodiment of the present disclosure.
FIGS. 8-12 illustrate a method of manufacturing a positive electrode according to an example embodiment of the present disclosure.
FIG. 13 is a photograph showing the appearance of an all-solid-state battery according to a comparative example.
FIG. 14 is a flow chart illustrating a method for manufacturing an all-solid-state battery, according to an example embodiment.

### DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element, or intervening elements may be present therebetween. In the drawings, thicknesses of some components may be exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated in the drawings as examples have general properties, and shapes of regions illustrated in the drawings are used to disclose specific shapes as examples, but do not limit to the scope of the present disclosure. It is understood that, although the terms "first," "second," "third," and the like, may be used herein to describe various elements, these elements should not be limited by these terms. These terms are only used to distinguish one element from another element. Some example embodiments explained and illustrated herein include complementary embodiments thereof.

The terms in this description are merely used to describe various embodiments, but not intended to limit the present disclosure. Unless otherwise specially noted in this description, the expression of singular form may include the expression of plural form. The terms "comprise" and/or "comprising" used in this description do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) of particles having a cumulative volume of about 50 vol% in particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter (D₅₀) value may be obtained through a calculation. Dissimilarly, a laser scattering method may be utilized to measure the average particle diameter (D₅₀). In the laser scattering method, a target particle is dispersed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

In this description, the average particle diameter may refer to a diameter measured by randomly selecting 100 or more particles from an electron microscope image. Alternatively, in this description, the average particle diameter may be measured using a particle size analyzer and may refer to a diameter of a particle having a cumulative volume of about 50 vol% in particle size distribution.

In this description, each of phrases as "A or B," "at least one of A and B," "at least one of A or B," "A, B, or C," "at least one of A, B, and C," and "at least one of A, B, or C," may include any one of, or all possible combinations of, the items enumerated together in a corresponding one of the phrases.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### All Solid-State Battery

An all-solid-state battery according to example embodiments of the present disclosure may include a unit cell. A unit cell may refer to a single or minimum unit required to operate the battery system. A unit cell may include the essential components of the all-solid-state battery. For example, the unit cell may include a positive electrode, a negative electrode, and a solid electrolyte layer between the positive electrode and the negative electrode. In some cases, the unit cell may further include an additional functional layer, such as an adhesion enhancement layer, which is disposed between the positive electrode and the solid electrolyte layer, or between the negative electrode and the solid electrolyte layer. The all-solid-state battery may include a plurality of unit cells.

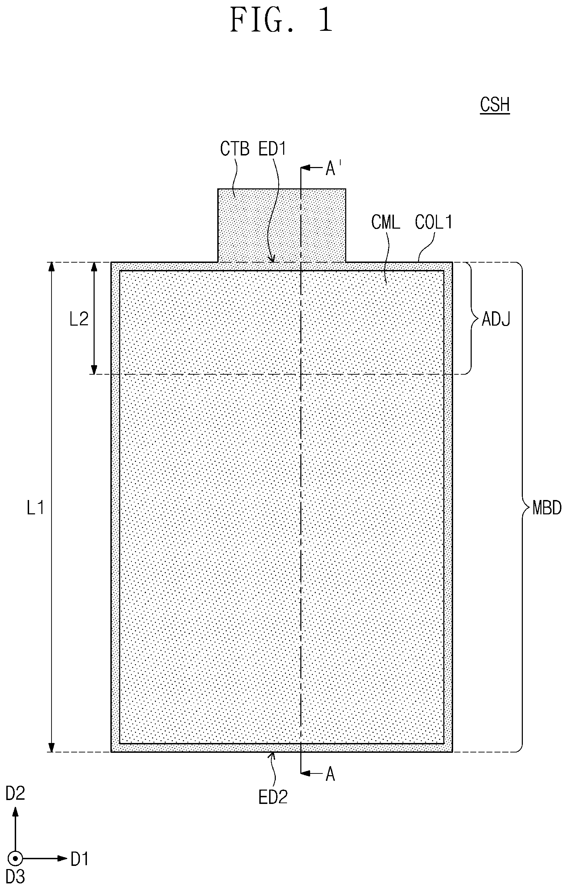

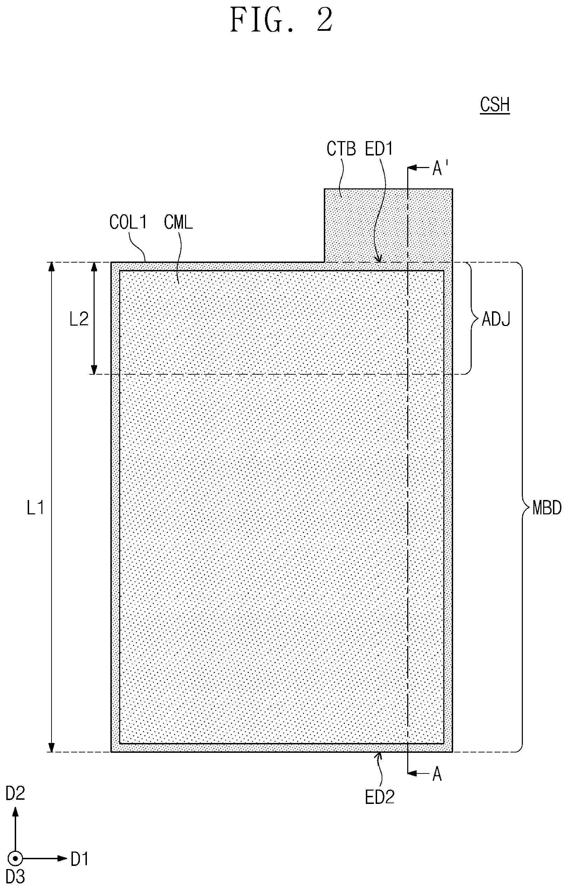

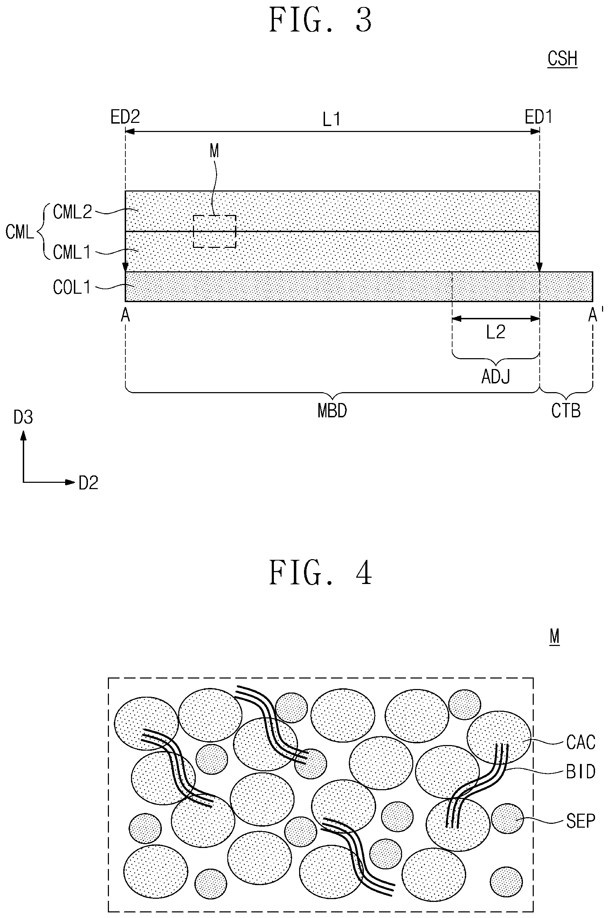

FIGS. 1 and 2 are plan views of a positive electrode CSH according to example embodiments of the present disclosure. FIG. 3 is a cross-sectional view of the positive electrode CSH taken along line A-A' in FIG. 1. FIG. 4 is an enlarged view of the region "M" identified in FIG. 3. The positive electrode CSH according to an example embodiment of the present disclosure may include a positive electrode current collector COL1, and a positive electrode active material layer CML disposed on the positive electrode current collector COL1. The positive electrode active material layer CML may include a positive electrode active material CAC, a solid electrolyte SEP, and a binder BID. Although not illustrated, the positive electrode active material layer CML may further include a conductive material.

The positive electrode current collector COL1 may provide a reference surface on which the positive electrode active material layer CML is disposed. The positive electrode current collector COL1 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

In order to increase the binding force between the positive electrode current collector COL1 and the positive electrode active material layer CML, a carbon-containing layer having a thickness in a range of ≥ 0.1 µm to ≤ 4 µm, or ≥ 1 µm to ≤ 3 µm, may be further disposed between the positive electrode current collector COL1 and the positive electrode active material layer CML. For example, the carbon-containing layer may include a relatively large amount of binder. The carbon-containing layer may improve the adhesion between the positive electrode current collector COL1 and the positive electrode active material layer CML. The carbon-containing layer may improve the conductivity of the positive electrode CSH.

The positive electrode active material CAC of the positive electrode active material layer CML may include a material capable of reversibly absorbing and desorbing lithium ions. The positive electrode active material CAC may include a plurality of particles. The positive electrode active material CAC may include, for example, but is not necessarily limited to, at least one of lithium transition metal oxides (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide. Each, or at least one, of the positive electrode active material (CAC) may be or include a single material, or may be a mixture of two or more materials.

The lithium transition metal oxide may be or include, for example, a compound represented by one of LiₐA_{1-b}B_{b}D₂ (where 0.90≤a≤1 and 0≤b≤0.5), LiₐE_{1-b}B_{b}O_{2-c}D_{c} (where 0.90≤a≤1, 0≤b≤0.5, and 0≤c≤0.05), LiE_{2-b}B_{b}O_{4-c}D_{c} (where 0≤b≤0.5 and 0≤c≤0.05), LiₐNi_{1-b-c}Co_{b}B_{c}D_{α} (where 0.90≤a≤1, 0≤b≤0.5, 0≤c≤0.05, and 0<α<2), LiₐNi_{1-b-c}Co_{b}B_{c}O_{2-α}F_{α} (where 0.90≤a≤1, 0≤b≤0.5, 0≤c≤0.05, and 0<α<2), LiₐNi_{1-b-c}Mn_{b}B_{c}D_{α} (where 0.90≤a≤1, 0≤b≤0.5, 0≤c≤0.05, and 0<α≤2), LiₐNi_{1-b-c}Mn_{b}B_{c}O_{2-α}F_{α} (where 0.90≤a≤1, 0≤b≤0.5, 0≤c≤0.05, and 0<α<2), LiₐNi_{b}E_{c}G_{d}O₂ (where 0.90≤a≤1, 0≤b≤0.9, 0≤c≤0.5, and 0.001≤d≤0.1), LiₐNi_{b}Co_{c}Mn_{d}GₑO₂ (where 0.90≤a≤1, 0≤b≤0.9, 0≤c≤0.5, 0≤d≤0.5, and 0.001≤e≤0.1), LiₐNiG_{b}O₂ (where 0.9≤a≤1 and 0.001≤b≤0.1), LiₐCoG_{b}O₂ (where 0.90≤a≤1 and 0.001≤b≤0.1),LiₐMnG_{b}O₂ (where 0.90≤a≤1 and 0.001≤b≤0.1),LiₐMn₂G_{b}O₄ (where 0.90≤a≤1 and 0.001≤b≤0.1),QO₂, QS₂, LiQS₂, V₂O₅, LiV₂O₅, LiIO₂, LiNiVO₄, Li_{3-f}J₂(PO₄)₃ (where 0≤f≤2), Li_{3-f}Fe₂(PO₄)₃ (where 0≤f≤2), and LiFePO₄. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material CAC may include, for example, a lithium salt of a transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of cations and anions are arranged displaced from each other by 1/2 of a ridge of a unit lattice. The lithium transition metal oxide having the layered rock salt type structure may be or include a ternary lithium transition metal oxide, such as LiNiₓCo_{y}Al_{z}O₂ (NCA) or LiNiₓCo_{y}Mn_{z}O₂ (NCM) (where 0<x<1,0<y<1, 0<z<1, and x+y+z=1). When the positive electrode active material CAC includes a ternary lithium transition metal oxide having the layered rock salt type structure, the unit cell may have increased energy density and improved thermal stability.

The compound included in the positive electrode active material CAC may be covered with a coating layer (not shown). The positive electrode active material CAC may be included in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound that constitutes the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, Li₂O-ZrO₂ (LZO). A method for forming the coating layer may be or include any method that does not adversely affect physical characteristics of the positive electrode active material. The method of forming the coating layer may include, for example, spray coating or immersion.

When the positive electrode active material CAC includes nickel (Ni) as a ternary lithium transition metal oxide such as NCA or NCM, for example, it is possible to increase the capacity density of the unit cell and reduce metal elution of the positive electrode active material in a charged state. As a result, cycle characteristics in a charged state of the unit cell may be improved. The "cycle characteristic" may refer to properties that indicate the degree to which the unit cell is degraded due to charge and discharge. For example, the unit cell with high cycle characteristics may degrade less due to charge and discharge, while the unit cell with low cycle characteristics may degrade more due to charge and discharge.

The positive electrode active material CAC may have, for example, a substantially spherical or substantially oval particle shape. The particle diameter and content of the positive electrode active material CAC are not limited. For example, the average particle diameter of the positive electrode active material CAC analyzed by a scanning electron microscope (SEM) image may be in a range of ≥ 200 nm to ≤ 25 µm.

The solid electrolyte SEP of the positive electrode active material layer CML may have a particle shape. The solid electrolyte SEP may be dispersed between the positive electrode active materials CAC. The solid electrolyte SEP may include a sulfide-based solid electrolyte having desired or improved lithium-ion conductivity characteristics. The sulfide-based solid electrolyte may include, for example, at least one of Li₂S-P₂S₅, Li₂S-P₂S₅-LiX (where X is or includes a halogen element), Li₂S-P₂S₅-Li₂O, Li₂S-P₂S₅-Li₂O-Lil, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, and "Z" is or includes at least one of Ge, Zn, and Ga), Li₂S-GeS₂, Li₂S-SiS₂-Li₃PO₄, Li₂S-SiS₂-LiₚMO_{q} (where p and q are each a positive integer, and "M" is or includes at least one of P, Si, Ge, B, Al, Ga, and In), Li₇₋ₓPS₆₋ₓClₓ (where 0≤x≤2), Li₇₋ₓPS₆₋ₓBrₓ (where 0≤x≤2), and Li₇₋ₓPS₆₋ₓIₓ (where 0≤x≤2).

The sulfide-based solid electrolyte may be or include, for example, an Argyrodite-type compound including at least one of Li₇₋ₓPS₆₋ₓClₓ (0≤x≤2), Li₇₋ₓSP₆₋ₓBrₓ (0≤x≤2), or Li₇₋ₓPS₆₋ₓIₓ (0≤x≤2). For example, the sulfide-based solid electrolyte may include an argyrodite-type compound including at least one of Li₆PS₅Cl, Li₆PS₅Br or Li₆PS₅I.

Alternatively, the sulfide-based solid electrolyte may include an argyrodite-type compound including Li_{7-a-c}MₐPS_{6-c}X_{c} (0≤a≤2, 0≤c≤2). In the chemical formula above, X may be or include at least one of F, Br, Cl, I, or a combination thereof. M may include scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (TI), silicon (Si), germanium (Ge), tin (Sn), lead (Pb), arsenic (As), antimony (Sb), bismuth (Bi), or a combination thereof.

The density of the argyrodite-type solid electrolyte SEP may be in a range of ≥ 1.5 g/cc to ≤ 2.0 g/cc. Because the argyrodite-type solid electrolyte SEP has a density of ≥ 1.5 g/cc or more, the internal resistance of the all-solid-state battery may be reduced, and it may be possible to hinder or prevent the solid electrolyte membrane from penetrating and short-circuiting due to the formation of lithium dendrites. The elastic modulus of the solid electrolyte SEP may be, for example, in a range of ≥ 15 GPa to ≤ 35 GPa.

The solid electrolyte SEP in the positive electrode active material layer CML may have a smaller average particle diameter than the solid electrolyte in the solid electrolyte layer to be described later. For example, the average particle diameter of the solid electrolyte SEP of the positive electrode active material layer CML may be 90% or less, 80% or less, 70% or less, 60% or less, 50% or less, 40% or less, 30% or less, or 20% or less of an average particle diameter of a solid electrolyte of the solid electrolyte layer. The average particle diameter may be a median diameter measured using, e.g., a laser particle size distribution analyzer.

The positive electrode active material layer CML may further include a binder BID. The binder BID may keep the positive electrode active material CAC, the solid electrolyte SEP, and the conductive material within the positive electrode active material layer CML together. The binder BID may include a material that is configured to improve adhesion between the positive electrode active material layer CML and the positive electrode current collector COL1. The binder BID may include, for example, at least one of polyvinylidene fluoride, styrene butadiene rubber (SBR), polytetrafluoroethylene, vinylidene fluoride/hexafluoropropylene copolymer, polyacrylonitrile, or polymethylmethacrylate.

The positive electrode active material layer CML may further include a conductive material. The conductive material may have conductivity without causing a substantial chemical change in the unit cell, thereby increasing the conductivity of the positive electrode active material CAC and the solid electrolyte SEP. The conductive material may include a carbon-based material. The conductive material may include, for example, at least one of graphite, carbon black, acetylene black, carbon nanofibers, or carbon nanotubes.

In an example embodiment, the content of the positive electrode active material CAC may be in a range of ≥ 10 wt% to ≤ 99 wt%, ≥ 30 wt% to ≤ 80 wt%, ≥ 40 wt% to ≤ 70 wt%, ≥ 40 wt% to ≤ 50 wt%, ≥ 60 wt% to ≤ 90 wt%, or ≥ 70 wt% to ≤ 90 wt% with respect to the total weight of the negative electrode active material layer (CML).

In an example embodiment, the content of the solid electrolyte SEP in the positive electrode active material layer CML may be in a range of ≥ 10 wt % to ≤ 70 wt %, ≥ 10 wt % to ≤ 60 wt %, ≥ 5 wt % to ≤ 30 wt %, ≥ 5wt % to ≤ 25 wt %, or ≥ 10 wt % to ≤ 40 wt % with respect to the total weight of the positive electrode active material layer CML.

The positive electrode active material layer CML may further include additives such as, e.g., a filler, a coating agent, a dispersant, and an ion conductive auxiliary agent, in addition to the positive electrode active material CAC, the solid electrolyte SEP, the conductive material, and the binder described above.

Hereinafter, the positive electrode according to example embodiments of the present disclosure is described in more detail with reference to the drawings. Referring to FIG. 1, the positive electrode current collector COL1 may include a main body section MBD and a positive electrode tab CTB. The main body section MBD may provide a region in which the positive electrode active material layer CML is disposed. The positive electrode tab CTB may refer to an uncoated region protruding in one direction from the main body section MBD. That is, the positive electrode active material layer CML may be provided on the main body section MBD, but may not be provided on the positive electrode tab CTB.

Referring to the example embodiment in which the positive electrode tab CTB protrudes in the second direction D2 as shown in FIG. 1, the main body section MBD may include a first end ED1 and a second end ED2 that are opposite to each other in the second direction. Each of the first end ED1 and the second end ED2 may refer to one end of the main body MBD. The first end ED1 may cross a boundary between the positive electrode tab CTB and the main body section MBD. That is, based on the first end ED1, the positive electrode current collector COL1 may be divided into the main body section MBD and the positive electrode tab CTB.

As shown in FIG. 2, even when the specific position of the positive electrode tab CTB differs, the main body section MBD and the positive electrode tab CTB may be still distinguished based on, or with respect to, the first end ED1. Regardless of the position, the positive electrode tab CTB may protrude in the second direction D2 in the same manner.

The positive electrode tab CTB may be electrically connected to a lead tab, allowing the lead tab to be connected to the outside of the unit cell. The positive electrode tab CTB may transmit a current generated in the positive electrode to an external circuit. The positive electrode tab CTB may be configured to stably provide current flow between the inside and the outside of the unit cell. However, the region of the cathode active material layer CML adjacent to the positive electrode tab CTB may experience an issue where the local current density increases.

The positive electrode active material CAC present in certain regions of the positive electrode active material layer CML adjacent to the positive electrode tab CTB may be unevenly distributed, possibly leading to the irreversible deposition of lithium. This can degrade the structural stability of the positive electrode CSH and potentially cause short circuits. Moreover, when increasing the loading amount or thickness of the electrode to enhance the capacity of the all-solid-state batter, this issue may become even more severe.

Additionally, as the loading amount of the positive electrode CSH increases, the distribution of the binder BID in the positive electrode CSH may become non-uniform, leading to reduced adhesion with the positive electrode current collector COL1. This may cause detachment of the positive electrode, which may degrade long-term cycle performance of the battery. In particular, this problem may be further exacerbated when a dry process is included for the production of the positive electrode.

In order to address this issue, example embodiments of the present disclosure aim to regulate the composition distribution within the positive electrode through electrode structure design, thereby maintaining the overall electrical and chemical stability of the positive electrode in a uniform manner. Hereinafter, the structural characteristics of the positive electrode according to example embodiments of the present disclosure are described in detail.

Referring to FIG. 3, the positive electrode CSH according to example embodiments of the present disclosure may include a cathode active material layer CML having a multilayer structure. For example, the positive electrode active material layer CML may include a first layer CML1 on the positive electrode current collector COL1, and a second layer CML2 on the first layer CML1. The first layer CML1 and the second layer CML2 may each include at least one of a positive electrode active material CAC, a solid electrolyte SEP, and a binder BID. Composition ratios of the first layer CML1 and the second layer CML2 may be different from each other. Thicknesses of the first layer CML1 and the second layer CML2 may be either the same or different.

In an example embodiment of the present disclosure, the binder BID content of the first layer CML1 may be greater than the binder BID content of the second layer CML2. In this case, the binder BID content of the first layer CML1 may refer to a weight ratio of the binder BID to the total weight of the first layer CML1. By increasing the binder BID content of the first layer CML1, the adhesion between the positive electrode active material layer CML and the positive electrode current collector COL1 can be improved.

By enhancing the adhesion between the positive electrode active material layer CML and the positive electrode current collector COL1, it may be possible to reduce heat generation and resistance at the contact interface where current flows. In addition, example embodiments of the present disclosure may reduce or prevent delamination of the positive electrode active material due to shrinkage/expansion caused by charging/discharging. In particular, in all-solid-state batteries, where all components of the battery are in a solid state, mechanical stress caused by volume changes may be a major factor that impairs the stability of the electrode structure. Therefore, improving the adhesion strength of the positive electrode becomes even more important.

In an example embodiment, the binder content of the first layer CML1 may be ≥ 1 wt% or more, and the binder content of the second layer CML2 may be less than 1 wt%. The binder content of the first layer CML1 may be in a range of ≥ 1 wt % to ≤ 1.5 wt %. Within the above range, the first layer CML1 may improve the bonding strength between the positive electrode active material layer CML and the positive electrode current collector COL1, while still maintaining appropriate performance as an active material layer.

In an example embodiment, the binder BID content of the second layer CML2 may be in a range of ≥ 0.4 wt % to ≤ 0.9 wt %. By containing a relatively lower amount of binder BID, the second layer CML2 may enhance ion conductivity between the positive electrode active material layer and the solid electrolyte layer, thereby increasing the energy density of the positive electrode.

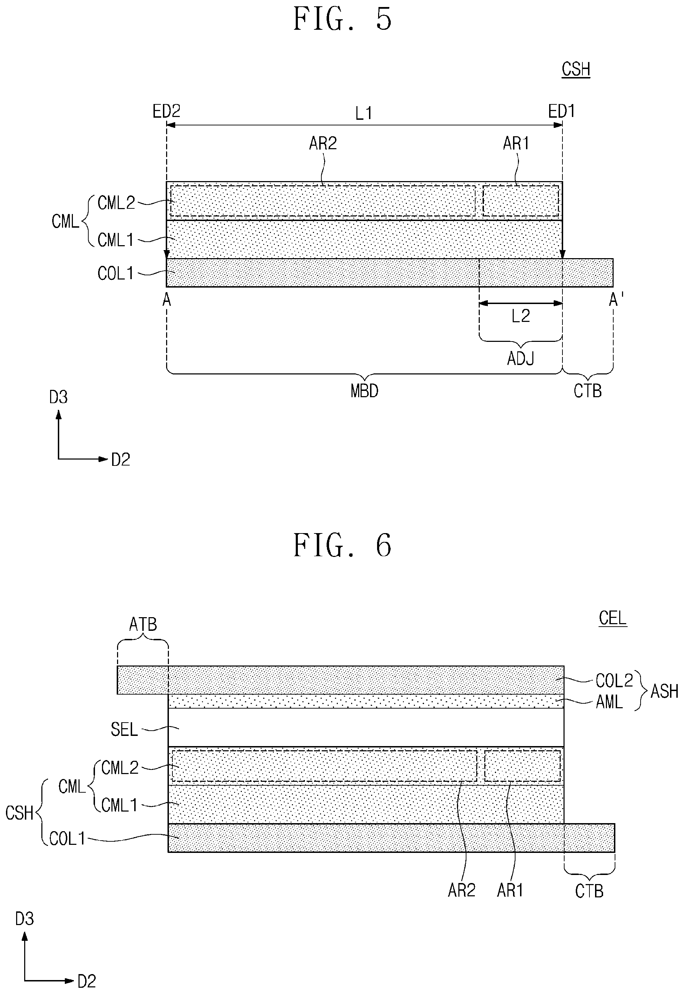

Referring to FIG. 5, the positive electrode active material layer CML according to example embodiments of the present disclosure may include a first layer CML1 and a second layer CML2. The second layer CML2 may include a first region AR1 adjacent to the positive electrode tab CTB, and a second region AR2 which excludes the first region AR1. In this case, the composition of the first region AR1 and the composition of the second region AR2 may be different from each other.

In an example embodiment, the binder content of the first region AR1 may be greater than the binder content of the second region AR2. By relatively increasing the binder content of the first region AR1 adjacent to the positive electrode tab CTB, the overall balance of the positive electrode active material layer CML may be improved, short circuit may be reduced or prevented, and the life characteristics may be improved.

For example, in the positive electrode active material layer CML, the current density in certain regions adjacent to the positive electrode tab CTB may become relatively high. This can lead to an increase in electrical load in the affected area, thereby causing localized temperature rises. Such localized heating not only compromises the stability of the battery, but also poses a risk of delamination of the positive electrode active material layer CML.

In order to solve this problem, by increasing the binder BID content of the first region AR1, the adhesion between materials may be enhanced, and mechanical stability may be improved. That is, by increasing the binder BID content of the first region AR1, degradation and delamination that may occur in high current density areas may be mitigated, and interfacial deterioration caused by temperature rise may be reduced or prevented. As a result, by adjusting the local input amount of the binder BID, the overall balance of the positive electrode may be maintained while simultaneously or contemporaneously improving both the cycle characteristics and stability of the battery.

According to example embodiments of the present disclosure, in the second layer CML2, the area ratio of the first region AR1 to the second region AR2 may be in the range of 1:9 to 4:6. That is, the area ratio of the first region AR1 may be in the range of ≥ 10% to ≤ 40% with respect to the total area of the second layer CML2.

The area ratio may be determined based on the cross-sectional area in a two-dimensional plane parallel to the positive electrode current collector COL1. For example, the area of the first region AR1 may refer to the area of a plane defined by the first direction D1 and the second direction D2 (see FIGS. 1 and 2).

When the area of the first region AR1 is less than about 10%, the binder BID content in the second layer CML2 may become excessively or substantially low, thereby reducing the binding strength of the upper layer portion of the positive electrode active material layer CML. This may reduce the bonding performance between the positive electrode active material layer CML and the solid electrolyte layer. When the area of the first region AR1 exceeds about 40%, the overall binder BID content in the positive electrode active material layer CML may increase, which may reduce the ion conductivity between the solid electrolyte layer and the positive electrode active material layer, thereby deteriorating the performance of the positive electrode. By controlling the area ratio of the first region AR1 within the above range, it may be possible to address the aforementioned issues while ensuring that the positive electrode active material layer possesses appropriate physical properties.

In an example embodiment, the binder content of the first region AR1 may be in a range of ≥ 0.7 wt % to ≤ 0.9 wt %. The binder content of the second region AR2 may be in a range of ≥ 0.4 wt % to ≤ 0.6 wt %.

The thicknesses of the first layer CML1 and of the second layer CML2 may be different from each other. In an example embodiment, the first layer CML1 may be thinner than the second layer CML2. Accordingly, because the positive electrode active material layer CML includes the first layer CML1 having a high binder content being relatively thin, the binding force with the positive electrode current collector may be improved, and the performance of the positive electrode may be improved or optimized. That is, the first layer CML1 may constitute a bonding layer of the positive electrode active material layer CML.

Referring back to FIGS. 1 to 3, the main body section MBD may include a tab adjacent section ADJ that is adjacent to the positive electrode tab CTB. For example, the main body section MBD may include a tab adjacent section ADJ that extends from the first end ED1 toward the second end ED2. The tab adjacent section ADJ may be a region that is adjacent to the first end ED1.

In an example embodiment, the tab adjacent section ADJ may be defined as a region having an area corresponding to ≤ 20% of the total area of the main body section MBD. That is, the tab adjacent section ADJ may be a region extending from the first end ED1 toward the second end ED2, and may have an area of about 20% of the area of the main body section MBD.

In an example embodiment, the tab adjacent section ADJ may be a region having a substantially constant width with respect to the second direction D2. For example, the tab adjacent section ADJ may refer to a region extending from the first end ED1 toward the second end ED2 by a second length L2. That is, the width of the tab adjacent section ADJ with respect to the second direction D2 may correspond to the second length L2.

In this case, the area of the tab adjacent section ADJ may be obtained by multiplying the width of the first end ED1 by the second length L2. With respect to the second direction D2, the width of the main body section MBD may correspond to a first length L1. When the width of the main body section MBD in the first direction D1 is substantially constant, the ratio of the second length L2 to the first length L1 (L2/L1) may be about 0.2.

Referring back to FIG. 5, the first region AR1 may be located on the tab adjacent section ADJ. The area of the first region AR1 may coincide with the area of the tab adjacent section ADJ, or may be different. For example, a part or the entirety of the first region AR1 may be included within a virtual cross-sectional area parallel to the tab adjacent section ADJ.

In an example embodiment, the first region AR1 may be vertically overlapped with the tab adjacent section ADJ. By controlling higher content in the first region AR1 on the tab adjacent section ADJ within the second layer CML2, the adhesion of the electrode in the region adjacent to the positive electrode tab CTB may be enhanced. Binder degradation caused by heat and resistance generated due to high current density may be reduced or prevented, thereby improving the stability of the positive electrode.

As described above, the positive electrode CSH according to example embodiments of the present disclosure may improve or optimize the performance of the positive electrode by adjusting the area and composition within the positive electrode active material layer CML. By employing a multilayered structure in the positive electrode active material layer CML, it may be possible to enhance both the performance and stability of a high-capacity thick electrode. Moreover, by adjusting the binder content and area ratio of the first region AR1 and the second region AR2, the overall balance of the electrode may be maintained while improving performance. This configuration may enable flexible positive electrode design to meet various requirements for all-solid-state batteries. As a result, by enhancing the stability and cycle characteristics of the positive electrode CSH, a high-performance all-solid-state battery can be provided.

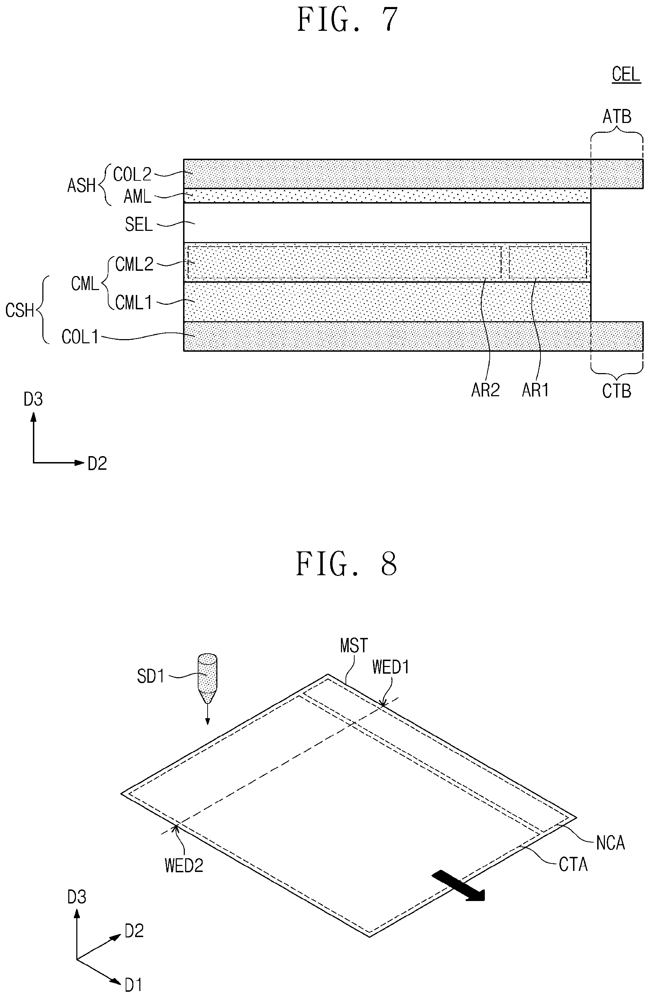

Hereinafter, with reference to FIGS. 6 and 7, other components of the all-solid-state battery according to example embodiments of the present disclosure are described. FIGS. 6 and 7 are cross-sectional views of a unit cell CEL according to example embodiments of the present disclosure.

The unit cell CEL may include a positive electrode CSH, a negative electrode ASH, and a solid electrolyte layer SEL between the positive electrode CSH and the negative electrode ASH. The positive electrode CSH may include a positive electrode current collector COL1, and a positive electrode active material layer CML on the positive electrode current collector COL1. The negative electrode ASH may include a negative electrode current collector COL2, and a negative electrode coating layer AML on the negative electrode current collector COL2. The negative electrode current collector COL2 may include a negative electrode tab ATB protruding in one direction. The negative electrode tab ATB may be oriented in the same direction as the positive electrode tab CTB, or may be disposed in an opposite direction thereof.

The negative electrode ASH may include a negative electrode current collector COL2, and a negative electrode coating layer AML on the negative electrode current collector COL2. The negative electrode current collector COL2 may provide a reference surface on which the negative electrode coating layer AML is disposed. The negative electrode current collector COL2 may include, for example, a material that does not react with lithium, that is, that does not form at least one of an alloy and a compound with lithium. For example, the negative electrode current collector COL2 may include at least one metal such as at least one of copper (Cu), stainless steel, titanium (Ti), iron (Fe), cobalt (Co), and nickel (Ni). The thickness of the negative electrode current collector COL2 may be in a range of ≥ 1 µm to ≤ 20 µm, for example, 5 ≥ µm to ≤ 15 µm, and for example, ≥ 7 µm to ≤ 10 µm.

The negative electrode current collector COL2 may be composed of or include a single metal such as at least one of the above-described metals, or may include an alloy or a coated material including two or more metals. The negative electrode current collector COL2 may be in the form of, for example, a plate or a foil. In some example embodiments, the negative electrode current collector COL2 may be omitted.

Although not shown, the negative electrode current collector COL2 according to example embodiments of the present disclosure may include a base film, and a metal layer disposed on one surface, or on both surfaces, of the base film. The base film may include, for example, a polymer. The polymer may be or include, for example, a thermoplastic polymer. The polymer may include, for example, at least one of polyethylene terephthalate (PET), polyethylene (PE), polypropylene (PP), polybutylene terephthalate (PBT), polyimide (PI), or a combination thereof. The polymer may be or include an insulating polymer. By including an insulating thermoplastic polymer, the base film may soften or liquefy in the event of a short circuit, thereby interrupting battery operation and reducing or suppressing a rapid increase in current. The metal layer may include, for example, at least one of copper (Cu), stainless steel, titanium (Ti), iron (Fe), cobalt (Co), nickel (Ni), or an alloy thereof. The negative electrode current collector COL2 may additionally include a metal chip and/or a lead tab. The base film, the metal layer, the metal chip, and the lead tab of the negative electrode current collector COL2, may be similar to the same structures in the positive electrode current collector COL1 described above. By having such a structure, the negative electrode current collector COL2 may reduce the weight of the negative electrode ASH and, as a result, enhance the energy density of the unit cell CEL.

The negative electrode coating layer AML may be configured such that lithium metal is grown between the unit cell CEL and the negative electrode current collector COL2 during charging of the unit cell CEL. The negative electrode coating layer AML may be configured as a protective layer of lithium metal, and may reduce or suppress deposition and growth of lithium dendrites.

The negative electrode coating layer AML may include a metal and carbon. For example, the negative electrode coating layer AML may include at least one metal such as at least one of gold (Au), platinum (Pt), palladium (Pd), silicon (Si), silver (Ag), aluminum (Al), bismuth (Bi), tin (Sn), and zinc (Zn). The metal of the negative electrode coating layer AML may help lithium ions move toward the negative electrode current collector COL2 during charging and discharging of the all-solid-state battery.

The negative electrode coating layer AML may include at least one of amorphous carbon, crystalline carbon, or porous carbon. The negative electrode coating layer AML may include at least one carbon such as at least one of carbon black, acetylene black, furnace black, ketjen black, and graphene. The carbon in the negative electrode coating layer AML may reduce or minimize the volume change of the all-solid-state battery during charging and discharging, and may provide structural stability of the negative electrode coating layer AML.

In an example embodiment, the negative electrode coating layer AML may include a mixture (or composite) of carbon black and silver (Ag).

The negative electrode coating layer AML may have a thickness that is lower than the thickness of the positive electrode active material layer CML. For example, the negative electrode coating layer AML may have a thickness that is equal to or less than 50%, 40%, 30%, 20%, 10%, or 5% of the thickness of the positive electrode active material layer CML. The thickness of the negative electrode coating layer AML may be in a range of, for example, ≥ 1 µm to ≤ 20 µm, ≥ 2 µm to ≤ 10 µm, or ≥ 3 µm to ≤ 7 µm. When the thickness of the negative electrode coating layer AML is excessively or substantially thin, lithium dendrites formed between the negative electrode coating layer AML and the negative electrode current collector COL2 may penetrate and collapse the negative electrode coating layer AML, thereby deteriorating the cycle characteristics of the unit cell CEL. On the other hand, when the thickness of the negative electrode coating layer AML is excessively or substantially increased, the energy density of the unit cell CEL may decrease, and the internal resistance of the unit cell CEL may increase due to the negative electrode coating layer AML, thereby deteriorating the cycle characteristics of the unit cell CEL.

The negative electrode coating layer AML may further include other additives in addition to the metal and carbon. The negative electrode coating layer AML may further include, for example, at least one additive including at least one of a binder, a filler, a coating agent, a dispersant, and an ion conductive auxiliary.

Although not shown, a carbon layer may further be included between the negative electrode coating layer AML and the solid electrolyte layer SEL to improve adhesion.

In another example embodiment, the negative electrode ASH of the unit cell CEL may further include a lithium metal layer (not shown) between the negative electrode current collector COL2 and the negative electrode coating layer AML. The lithium metal layer may have an increased thickness when the unit cell CEL is charged. The negative electrode coating layer AML may be configured as a protective layer for the lithium metal layer, and simultaneously or contemporaneously may reduce or suppress growth of lithium dendrites from the lithium metal layer.

The lithium metal layer may be or include a metal thin film including lithium or a lithium alloy. Lithium alloy may include, but is not limited to, Li-Al alloy, Li-Sn alloy, Li-In alloy, Li-Ag alloy, Li-Au alloy, Li-Zn alloy, Li-Ge alloy, and Li-Si alloy, and any suitable lithium alloys may be applicable. The lithium metal layer may include at least one of these alloys of lithium. The lithium metal layer may include various types of alloys.

The lithium metal layer may be configured as a negative electrode active material layer. That is, in the negative electrode according to example included as the negative electrode active material. The negative electrode active material may form a lithium metal layer or may be present in a dispersed form within the negative electrode coating layer AML. The negative electrode active material may be present within the lithium metal layer or inside the negative electrode coating layer AML.

The solid electrolyte layer SEL may be provided between the positive electrode CSH and the negative electrode ASH. The solid electrolyte layer SEL may include a sulfide-based solid electrolyte with desired or improved lithium ionic conductivity. The solid electrolyte in the solid electrolyte layer SEL may be the same as or different from any one of the materials included in the solid electrolyte SEP in the positive electrode active material layer CML described above.

The solid electrolyte may have a particle shape, such as substantially a sphere or an ellipsoid. For example, the average particle diameter of the solid electrolyte may be in a range of ≥ 1 µm to ≤ 20 µm, ≥ 1 µm to ≤ 15 µm, or ≥ 3 µm to ≤ 10 µm.

The solid electrolyte may include a sulfide-based solid electrolyte. The solid electrolyte may be amorphous, crystalline, or a mixture thereof. Additionally, the solid electrolyte may include, for example, at least one of sulfur (S), phosphorus (P), and lithium (Li) as at least constituent elements among the above-described sulfide-based solid electrolyte material. For example, the solid electrolyte may be or include a material including Li₂S-P₂S₅. When a sulfide-based solid electrolyte material forming the solid electrolyte includes Li₂S-P₂S₅, the molar mixing ratio of Li₂S to P₂S₅ may range from ≥ 50:50 to ≤ 90:10.

In an example embodiment, the solid electrolyte may include an argyrodite-type compound including at least one of Li₇₋ₓPS₆₋ₓClₓ (0≤x≤2), Li₇₋ₓPS₆₋ₓBrₓ (0≤x≤2), or Li₇₋ₓPS₆₋ₓIₓ (0≤x≤2). The solid electrolyte may include an argyrodite-type compound including at least one of Li₆PS₅Cl, Li₆PS₅Br or Li₆PS₅I.

In another example embodiment, the solid electrolyte may include an argyrodite-type compound including Li_{7-a-c}MₐPS_{6-c}X_{c}. X may be or include Cl, Br, or a combination thereof. M may be or include at least one of Na, K, Fe, Mg, Ca, Ag, Cu, Zr, Zn, or a combination thereof. Each of a and c may be a real number ranging from 0 to 2.

The density of argyrodite-type solid electrolyte may be in a range of ≥ 1.5 g/cc to ≤ 2.0 g/cc. Since the argyrodite-type solid electrolyte has a density of 1.5 g/cc or more, the internal resistance of the all-solid-state battery may be reduced, and it may be possible to hinder or prevent the solid electrolyte membrane from penetrating and short-circuiting due to the formation of lithium dendrites. The elastic modulus of the solid electrolyte SEP may be in a range of, for example, ≥ 15 GPa to ≤ 35 GPa.

The solid electrolyte layer SEL may further include a binder. The binder included in the solid electrolyte layer SEL may be or include, for example, at least one of styrene-butadiene rubber (SBR), polytetrafluoroethylene, polyvinylidene fluoride, polyethylene or the like, but is not limited thereto. For example, the binder included in the solid electrolyte layer SEL may include at least one of styrene-butadiene rubber (SBR), polytetrafluoroethylene, polyvinylidene fluoride, polyethylene, and polyacrylate. The binder of the solid electrolyte layer SEL may be the same as, or different from, the binder included in the positive electrode active material layer CML, or the binder included the negative electrode coating layer AML.

### All-Solid-State Battery Manufacturing Method

Hereinafter, a method for manufacturing an all-solid-state battery according to example embodiments of the present disclosure is described. The manufacturing of the all-solid-state battery may include individually fabricating the positive electrode, the negative electrode, and the solid electrolyte layer. However, in this description, emphasis is placed on the method for manufacturing the positive electrode.

In particular, except for the method for manufacturing the positive electrode for an all-solid-state battery according to example embodiments of the present disclosure, conventional manufacturing processes commonly used in the industry may be applied to the other manufacturing steps of the all-solid-state battery.

A method for manufacturing a positive electrode for an all-solid-state battery according to an example embodiment of the present disclosure may include forming an active material region on a metal substrate; forming a positive electrode sheet by drying the active material region; and forming a positive electrode composite layer by cutting the positive electrode sheet.

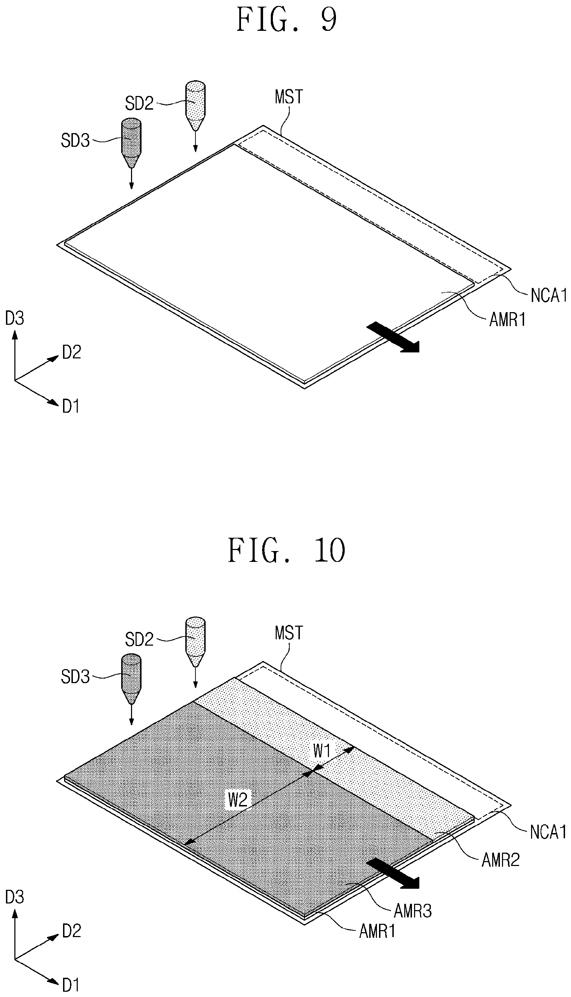

Referring to FIGS. 8 and 9, the metal substrate MST may be conveyed in the first direction D1, and an active material composition may be coated onto the conveyed metal substrate MST. A partial region of the metal substrate MST may be defined as a coated region CTA, while the remaining region may be defined as a non-coated region NCA. The non-coated region NCA may be formed at one end of the metal substrate MST in the width direction D2. For example, as shown in FIG. 8, the metal substrate MST may include a non-coated region NCA defined at a first side edge WED1 with respect to the second direction D2. In another example not shown in FIG. 8, the metal substrate MST may include a non-coated region NCA defined at a second side edge WED2, which is opposite to the first side edge WED1.

In this case, the active material region may be formed only in the coated region CTA. That is, the non-coated region NCA may be defined as a region in which the active material region is omitted. By leaving a portion of the metal substrate MST as the non-coated region NCA, the convenience of manufacturing the electrode may be improved. For example, the non-coated region NCA may be cut to form an electrode tab of the positive electrode according to example embodiments of the present disclosure. The coated region CTA may be cut to form a main body section of the positive electrode according to example embodiments of the present disclosure.

By continuously coating the active material composition on the metal substrate MST conveyed in the first direction D1, the efficiency of electrode production may be improved. In addition, by coating active material compositions with different compositions, the composition of the positive electrode active material layer may be readily designed during manufacturing. In this case, the active material region may be formed in consideration of the composition and structure of the positive electrode to be manufactured. Furthermore, by adjusting the area in which positive electrode active material regions having different compositions are coated, electrode design may be further simplified. By considering the form and composition of the electrode to be manufactured from the step of coating the active material region on the metal substrate MST, the productivity and yield of electrode manufacturing may be improved.

In an example embodiment, referring to FIGS. 9 and 10, the active material region may include a first active material region AMR1 on the metal substrate MST. The first active material region AMR1 may be formed on all or a part of the coating region CTA. A second active material region AMR2 and a third active material region AMR3 may be formed on the first active material region AMR1. In this case, each of the first, second, and third active material regions AMR1, AMR2, and AMR3 may include a positive electrode active material, a solid electrolyte, and a binder; the compositional ratios of the first, second, and third active material regions AMR1, AMR2, and AMR3 may be different from one another.

In an example embodiment, a binder content of the first active material region AMR1 may be greater than the binder content of the second active material region AMR2. The binder content of the second active material region AMR2 may be greater than the binder content of the third active material region AMR3. The binder content of the first active material region AMR1 may be in a range of ≥ 1 wt % to ≤ 1.5 wt %. The binder content of the second active material region AMR2 may be in a range of ≥ 0.7 wt % to ≤ 0.9 wt %. The binder content of the third active material region AMR3 may be in a range of ≥ 0.4 to ≤ 0.6 wt %.

The second active material region AMR2 and the third active material region AMR3 may be formed on the first active material region AMR1 to be aligned, or substantially aligned, with each other in the width direction D2. Each of, or one of, the second active material region AMR2 and the third active material region AMR3 may have a substantially constant width on the first active material region AMR1. The second active material region AMR2 may have a first width W1. The third active material region AMR3 may have a second width W2. The first width W1 and the second width W2 may be adjusted to be suitable for the structure of the electrode to be manufactured. For example, the first width W1 may be smaller than the second width W2.

The metal substrate MST on which the first active material region AMR1 is formed may be conveyed in a first direction D1, and the second active material slurry SD2 may be coated on the conveyed metal substrate MST with a substantially constant width, so that the second active material region AMR2 may be formed. A third active material slurry SD3 may be coated in parallel with the second active material region AMR2 with respect to the width direction D2 of the metal substrate MST, so that the third active material region AMR3 may be formed. Through such a continuous process, mass production of a positive electrode active material layer having a structure according to example embodiments of the present disclosure may be facilitated.

As described above, the metal substrate MST may include a non-coated region NCA in which the active material region is omitted. The non-coated region NCA may be formed on one side, or on both sides, of the metal substrate MST. In an example embodiment, referring to FIG. 10, the metal substrate MST may include a first non-coated region NCA1 formed on one side. In this case, the second active material region AMR2 may be adjacent to the first non-coated region NCA1 in the width direction D2. The first active material region AMR1 may be disposed at the base of the second and third active material regions AMR2 and AMR3.

That is, the metal substrate MST may include the first active material region AMR1 on the coated region CTA, and the second and third active material regions AMR2 and AMR3 may be formed on the first active material region AMR1. In this case, the second active material region AMR2 may be adjacent to the first non-coated region NCA1, and the first non-coated region NCA1, the second active material region AMR2, and the third active material region AMR3 may be arranged side by side in the width direction D2 of the metal substrate MST. In some cases, the metal substrate MST may further include a second non-coated region formed on the side opposite to the first non-coated region NCA1. In this case, the third active material region AMR3 may be adjacent to the second non-coated region in the width direction D2.

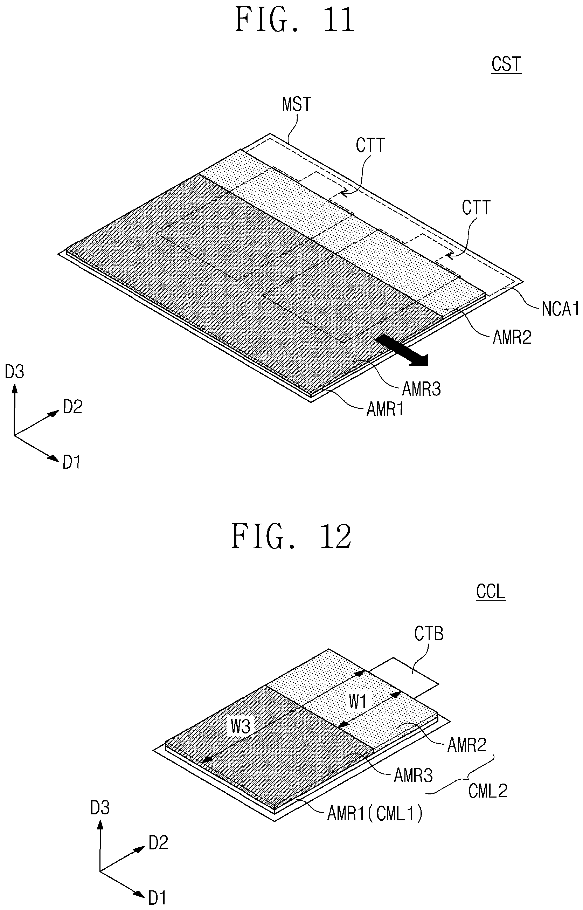

As illustrated in FIG. 11, the positive electrode sheet CST may be formed by drying the active material region on the metal substrate MST. By drying the active material region, the positive electrode sheet CST may constitute a positive electrode active material layer having a suitable thickness and material properties.

As illustrated in FIG. 12, the formed positive electrode sheet CST may be cut to form a positive electrode composite layer CCL. The positive electrode composite layer CCL formed by cutting the positive electrode sheet CST may constitute a positive electrode of an all-solid-state battery. By cutting the positive electrode sheet CST into an appropriate size and shape, a positive electrode for an all-solid-state battery may be provided.

For example, referring to FIG. 11, a cutting line CTT may be provided in accordance with the shape of the positive electrode to be manufactured, and the positive electrode sheet CST may be cut along the cutting line CTT. In this case, the size and shape of the cutting line CTT may be adjusted according to the required capacity, size, or shape of the positive electrode.

FIG. 12 illustrates the positive electrode composite layer CCL of an example embodiment formed by cutting the positive electrode sheet CST. By cutting the positive electrode sheet CST, a portion of the first non-coated region NCA1 may be removed. As a result of cutting a portion of the first non-coated region NCA1, the positive electrode composite layer CCL may form a positive electrode tab CTB. That is, the positive electrode tab CTB of the positive electrode composite layer CCL may be formed by cutting the first non-coated region NCA1. By cutting the positive electrode sheet CST, only a part of the active material region may be separated. That is, the positive electrode composite layer CCL may include a positive electrode active material layer formed by cutting a part of the active material region.

In an example embodiment, the positive electrode composite layer CCL may include a first active material region AMR1, a second active material region AMR2, and a third active material region AMR3. That is, the positive electrode composite layer CCL may include a positive electrode active material layer formed by cutting the first active material region AMR1, the second active material region AMR2, and the third active material region AMR3.

The positive electrode active material layer may have a double-layer structure including a first layer CML1 that includes the first active material region AMR1, and a second layer CML2 that includes the second active material region AMR2 and third active material region AMR3. Thicknesses of the first layer CML1 and the second layer CML2 may be the same or different. For example, the thickness of the first layer CML1 may be smaller than the thickness of the second layer CML2.

In the second layer CML2, an area of the second active material region AMR2 and an area of the third active material region AMR3 may be different from each other. The appropriate composition and structure of the positive electrode active material layer may be designed by adjusting the area of the second active material region AMR2 and the area of the third active material region AMR3.

Referring back to FIG. 12, the area of the active material regions may be adjusted through the size and shape of the cutting line CTT. Although the final area ratio of the positive electrode composite layer CCL can be adjusted by controlling the area of each of the first active material region AMR1, the second active material region AMR2, and the third active material region AMR3 during the coating step, it may also be adjusted by cutting the positive electrode sheet CST. For example, the cutting line CTT having a shape as shown in FIG. 11 may maintain the width of the second active material region AMR2 substantially constant before and after cutting, while reducing the width of the third active material region AMR3.

In an example embodiment, the area of the second active material region AMR2 may be adjusted in a step of forming the second active material region AMR2 on the metal substrate, and the area of the third active material region AMR3 may be adjusted by cutting the positive electrode sheet CST. The area of the first active material region AMR1 may also be adjusted by cutting the positive electrode sheet CST. In the positive electrode sheet CST, a width of the second active material region W1 may be relatively smaller than a width of the third active material region W2.

For example, the area ratio of the active material regions may be calculated based on the width of the active material region. For example, referring to FIG. 12, the area ratio of the active material region may be calculated as the ratio of the width of the second active material region W1 to the width of the positive electrode active material layer W3, with respect to the second direction D2. In the positive electrode active material layer, the areas and widths of the first layer CML1 and the second layer CML2 may be substantially the same. That is, the area and width of the positive electrode active material layer may be the same as the area and width of the second layer CML2.

In an example embodiment, the area of the second active material region AMR2 may be in a range of ≥ 10% to ≤ 40% of the total area of the second layer CML2. By adjusting the area of the second active material region AMR2, which has a high binder content, within this range, the performance of the positive electrode to be manufactured may be improved. By controlling the binder content in the region of the second layer CML2 adjacent to the positive electrode tab CTB to be high, the adhesion strength of the positive electrode may be enhanced.

As described above, the positive electrode manufacturing method according to example embodiments of the present disclosure may improve or optimize the design and performance of the positive electrode by adjusting the area and composition of the active material regions on the metal substrate and cutting the metal substrate. For example, by adjusting the binder content and area ratio of the first active material region, the second active material region, and the third active material region, it may be possible to balance the overall electrode characteristics while considering the current density of the positive electrode, thereby improving performance. Furthermore, according to the method for manufacturing a positive electrode of the present disclosure, by implementing a multilayer positive electrode active material layer structure, it may become easier to design a positive electrode that meets various requirements of all-solid-state batteries. As a result, the method may contribute to improved productivity and yield of positive electrode, and enable the provision of high-performance all-solid-state batteries.

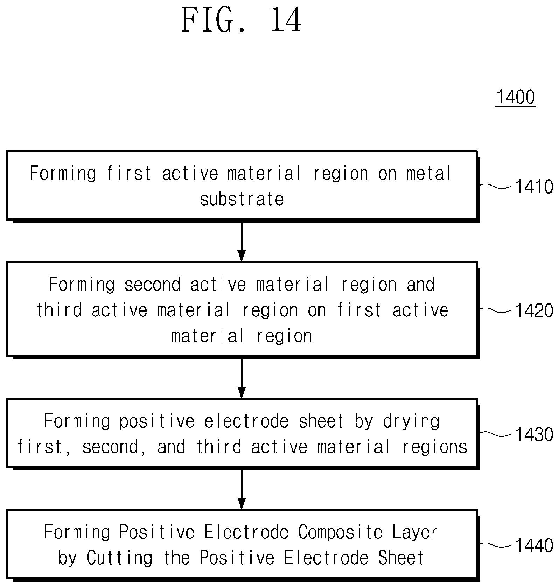

FIG. 14 is a flow chart illustrating a method for manufacturing an all-solid-state battery, according to an example embodiment. In FIG. 14, the method 1400 includes operation 1410 which includes forming a first active material region on a metal substrate. Operation 1420 includes forming a second active material region, and a third active material region on the first active material region. In an example, the second and third active material regions are arranged side by side in a width direction of the metal substrate. Operation 1430 includes forming a positive electrode sheet by drying the first, second, and third active material regions. For example, at least one of the first, second, and third active material region includes a positive electrode active material, a solid electrolyte, and a binder. Operation 1440 includes forming a positive electrode composite layer by cutting the positive electrode sheet.

In various examples, the positive electrode sheet includes a first non-coated region formed on one side thereof, and the second active material region is adjacent to the first non-coated region in the width direction. In other examples, the positive electrode composite layer includes an electrode tab formed by cutting the first non-coated region, a first positive electrode active material layer including the first active material region, and a second positive electrode active material layer including the second and third active material regions. In further examples, a binder content of the second active material region is less than a binder content of the first active material region, and a binder content of the third active material region is less than the binder content of the second active material region. In an example, the second active material region occupies ≥ 10% to ≤ 40% of the total area of the second positive electrode active material layer.

For example, the binder content of the first active material region is in a range of ≥ 1 wt% to ≤ 1.5 wt%. In another example, the binder content of the second active material region is in a range of ≥ 0.7 wt% to ≤ 0.9 wt%, and the binder content of the third active material region is in a range of ≥ 0.4 wt% to ≤ 0.6 wt%. In a further example, a thickness of the first positive electrode active material layer is smaller than a thickness of the second positive electrode active material layer. In examples, the method 1400 further includes forming a carbon layer on the metal substrate, wherein the first active material region is formed on the carbon layer.

Hereinafter, the present disclosure is described in more detail through Examples. These examples are provided for illustrative purposes only and are not intended to limit the scope of the present disclosure.

### Preparation of positive electrode:

As a positive electrode active material, particles of LiNi_{0.94}Co_{0.04}Mn_{0.02}O₂ having an average particle diameter of approximately 5 µm were prepared. As a solid electrolyte, argyrodite-type crystalline compound Li₆PS₅Cl, having an average particle diameter of approximately 2 µm, was prepared. PVdF-HFP was prepared as a binder. As the positive electrode slurry composition, a mixture of the above-described positive electrode active material, solid electrolyte, and binder was used.

### Manufacturing Example 1: First positive electrode composition

The first positive electrode composition was prepared by mixing the positive electrode active material, solid electrolyte, and binder in a weight ratio of 85:13.5:1.5.

### Manufacturing Example 2: Second positive electrode composition

The second positive electrode composition was prepared by mixing the positive electrode active material, solid electrolyte, and binder in a weight ratio of 92:7.2:0.8.

### Manufacturing Example 3: Third positive electrode composition

The second positive electrode composition was prepared by mixing the positive electrode active material, solid electrolyte, and binder in a weight ratio of 92:7.5:0.5.

Hereinafter, as is described in Examples and Comparative Examples, the positive electrode is prepared by dry-coating the positive electrode composition onto a positive electrode current collector made of a carbon-coated aluminum foil, followed by pressing at approximately 10 MPa and 130° C for 10 minutes.

### Preparation of negative electrode:

Carbon black (CB) as a carbon-based material and Silver (Ag) particles as metal particles were prepared. After mixing carbon black and silver particles in a 3:1 weight ratio, 4g of the resulting mixed powder was placed in a container. Then, 4g of an NMP solution containing 7 wt% polyvinylidene fluoride (PVdF, manufactured by KUREHA corporation) binder was added to prepare a mixed solution.

NMP was gradually added to the prepared mixed solution while stirring to produce a slurry. The prepared slurry was coated onto a SUS sheet using a bar coater, followed by drying at 80° C in air for 10 minutes. Subsequently, the coated sheet was vacuum-dried at 40° C for 10 hours to produce a laminate. The produced laminate was subjected to cold roll pressing to flatten the surface, thereby forming a negative electrode having a negative electrode coating layer/negative electrode current collector structure. At this time, the thickness of the negative electrode coating layer was about 15 µm, and the area of the negative electrode current collector was the same as the area of the negative electrode coating layer.

### Preparation of Solid Electrolyte Layer:

A mixture was prepared by adding 98.5 parts by weight of an argyrodite-type crystalline solid electrolyte (Li₆PS₅Cl), and 1.5 parts by weight of an acrylic binder. Octyl acetate was gradually added to the prepared mixture while stirring to produce a slurry. The prepared slurry was coated onto a 15 µm-thick nonwoven fabric placed on a 75 µm-thick PET substrate using a bar coater. The coated structure was then dried at 80° C in air for 10 minutes to prepare a laminate. The prepared laminate was vacuum-dried at 80° C for 2 hours, thereby forming a solid electrolyte layer.

### Assembly of All-Solid-State Battery:

The solid electrolyte layer was placed on the negative electrode, and the positive electrode was then placed on top of the solid electrolyte layer. The prepared laminate was subjected to plate pressing at approximately 85° C under a pressure of 500 MPa for 30 minutes. Through this pressing process, the solid electrolyte layer was sintered, thereby improving the battery characteristics. The thickness of the sintered solid electrolyte layer was approximately 45 µm.

The pressed laminate was then placed in a pouch, vacuum-sealed, and used to fabricate an all-solid-state battery. A portion of the positive electrode current collector and negative electrode current collector was extended out of the sealed battery to serve as a positive electrode terminal and a negative electrode terminal, respectively.

### Embodiment

### Example 1

The first positive electrode composition of Manufacturing Example 1 was coated onto a carbon-coated positive electrode current collector to form a first positive electrode active material layer. Subsequently, the second positive electrode composition of Manufacturing Example 2 and the third positive electrode composition of Manufacturing Example 3 were coated on the first positive electrode active material layer to form a second positive electrode active material layer. For example, the second positive electrode composition was coated on the tab adjacent region, and the third positive electrode composition was coated side by side in the width direction. At this time, the width direction is defined based on the protruding direction of the positive electrode tab. That is, the second positive electrode composition and the third positive electrode composition are sequentially coated in the order from the region adjacent to the positive electrode tab.

In the produced positive electrode, the thickness of the first positive electrode active material layer was about 50 µm, and the thickness of the second positive electrode active material layer was about 50 µm. Additionally, the positive electrode was fabricated such that, with respect to the total area of the second positive electrode active material layer, the area coated with the second positive electrode composition was approximately 15%, while the area coated with the third positive electrode composition was approximately 85%.

### Example 2

A positive electrode was fabricated in the same manner as in Example 1, with a difference that the area coated with the second positive electrode composition was approximately 35%, and the area coated with the third positive electrode composition was approximately 65%.

### Example 3

A positive electrode was fabricated in the same manner as in Example 1, with a difference that the thickness of the first positive electrode active material layer was approximately 30 µm, and the thickness of the second positive electrode active material layer was approximately 70 µm.

### Example 4

A positive electrode was fabricated in the same manner as in Example 2, with a difference that the thickness of the first positive electrode active material layer was approximately 30 µm, and the thickness of the second positive electrode active material layer was approximately 70 µm.

### Comparative Example 1

A positive electrode was fabricated in the same manner as in Example 1, with a difference that the area coated with the second positive electrode composition was approximately 5%, and the area coated with the third positive electrode composition was approximately 95%.

### Comparative Example 2

A positive electrode was fabricated in the same manner as in Example 1, with a difference that the area coated with the second positive electrode composition was approximately 50%, and the area coated with the third positive electrode composition was approximately 50%.

An all-solid-state battery was fabricated, including the same negative electrode and the same solid electrolyte layer, with a difference that the positive electrode was differentiated according to the above-described Examples and Comparative Examples. The all-solid-state batteries according to the Examples and Comparative Examples are summarized in Table 1 below.

**Table 1:**

| | First Layer | Second Layer | | |
|---|---|---|---|---|
| | Thickness | Area Ratio | | Thickn ess |
| | | Second Composition Area | Third Composition Area | |
| Example 1 | 50µm | 15% | 85% | 50µm |
| Example 2 | 50µm | 35% | 65% | 50µm |
| Example 3 | 30µm | 15% | 85% | 70µm |
| Example 4 | 30µm | 35% | 65% | 70µm |
| Comparative Example 1 | 50µm | 5% | 95% | 50µm |
| Comparative Example 2 | 50µm | 50% | 50% | 50µm |

### Evaluation Example 1: Battery Performance Evaluation

The performance of the all-solid-state batteries according to the Examples and Comparative Examples was evaluated. In the first cycle, the battery was charged at a constant current of 0.05C for 20 hours until the battery voltage reached 4.2 V. Subsequently, the battery was discharged at a current of 0.05C for 20 hours until the battery voltage reached 3.0 V.

In the second cycle, the battery was charged at a constant current of 0.1C for 10 hours until the battery voltage reached 4.2 V. Subsequently, the battery was discharged at a constant current of 0.1 C for 10 hours until the battery voltage reached 3.0 V. After the second cycle, charging and discharging were conducted under the same conditions as in the second cycle, up to 100 cycles.

The capacity retention rate was evaluated according to Equation 1 below. Capacity retention (%) = (Nth cycle discharge capacity/ 1st cycle discharge capacity) × 100

Based on the initial charge-discharge capacity, the capacity after 100 cycles was evaluated. The results are shown in Table 2 below.

**Table 2:**

| | Capacity Retention (%) |
|---|---|
| Example 1 | 92 |
| Example 2 | 91 |
| Example 3 | 95 |
| Example 4 | 94 |
| Comparative Example 1 | - |
| Comparative Example 2 | 80 |

Referring to the above evaluation results, it can be seen that the capacity retention rate of the all-solid-state battery according to the Examples of the present disclosure is relatively high. This indicates that the positive electrode according to the embodiments of the present disclosure achieves an improved or optimized overall electrochemical balance through the compositional design of the positive electrode active material layer, thereby improving the cycle life characteristics.

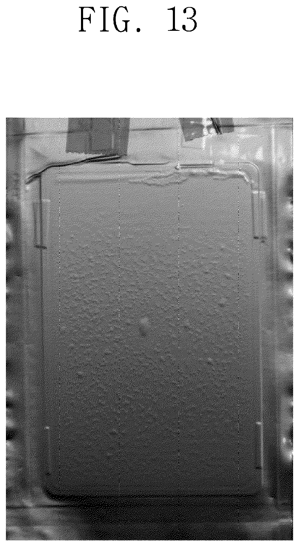

In the case of Comparative Example 1, the capacity retention rate could not be evaluated because a short circuit occurred in the charging/discharging process. Referring to FIG. 13, the protruding section of the battery pouch in Comparative Example 1 can be observed. Additionally, in the case of Comparative Example 2, a degraded performance was observed compared to the Examples.

In particular, in the case of Comparative Example 1, the region coated with the third positive electrode composition occupies the majority of the second layer. The overall binder content of the second layer decreases, reducing the adhesion strength of the upper layer of the positive electrode active material layer that is in contact with the solid electrolyte layer. As a result, this may have led to the aforementioned issue.

While this disclosure has been described in connection with what is presently considered to be example embodiments, it is to be understood that the present disclosure is not limited to the disclosed example embodiments and is intended to cover various modifications and equivalent arrangements included within the spirit and scope of the appended claims, and therefore the aforementioned embodiments should be understood to be examples but not limiting this disclosure in any way.

## Claims

1. A positive electrode (CSH) for an all-solid-state battery, the
positive electrode (CSH) comprising:
a positive electrode current collector (COL1); and
a positive electrode active material layer (CML) on the positive electrode current collector (COL1),
wherein the positive electrode current collector (COL1) comprises a main body section and a positive electrode tab protruding in one direction from the main body section,
wherein the positive electrode active material layer (CML) comprises a first layer on the main body section, and a second layer on the first layer, and at least one of the first and second layers includes a positive electrode active material, a solid electrolyte, and a binder,
wherein a binder content of the first layer is greater than a binder content of the second layer,
wherein the second layer includes a first region adjacent to the positive electrode tab, and a second region which is a remainder excluding the first region, and
an area ratio of the first region to the second region is in a range of ≥ 1:9 to ≤ 4:6.

2. The positive electrode (CSH) as claimed in claim 1,
wherein the binder content of the first layer is 1 wt% or more, and
wherein the binder content of the second layer is less than 1 wt%.

3. The positive electrode (CSH) as claimed in claim 1 or 2,
wherein the binder content of the first layer is in a range of ≥ 1 wt% to ≤ 1.5 wt%.

4. The positive electrode (CSH) as claimed in any of the claims 1 to
3,
wherein the binder content of the second layer is in a range of ≥ 0.4 wt% to ≤ 0.9 wt%.

5. The positive electrode (CSH) as claimed in any of the claims 1 to
4,
wherein the binder content of the first region is in a range of ≥ 0.7 wt% to ≤ 0.9 wt%.

6. The positive electrode (CSH) as claimed in any of the claims 1 to
5,
wherein the binder content of the second region is in a range of ≥ 0.4 wt% to ≤ 0.6 wt%.

7. The positive electrode (CSH) as claimed in any of the claims 1 to
6,
wherein a thickness of the first layer is smaller than a thickness of the second layer.

8. The positive electrode (CSH) as claimed in any of the claims 1 to
7,
wherein the main body section comprises a first end and a second end that are opposed to each other in the one direction,
wherein the first end crosses a boundary between the positive electrode tab and the main body section,
wherein the main body section further comprises a tab adjacent section extending from the first end toward the second end, and
wherein the first region vertically overlaps the tab adjacent section.

9. The positive electrode (CSH) as claimed in any of the claims 1 to
8, further comprising
a carbon coating layer between the positive electrode current collector (COL1) and the positive electrode active material layer (CML).

10. The positive electrode (CSH) as claimed in any of the claims 1
to 9,
wherein the binder comprises at least one of polyvinylidene fluoride, styrene butadiene rubber (SBR), polytetrafluoroethylene, polyvinylidene fluoride, vinylidene fluoride/hexafluoropropylene copolymer, polyacrylonitrile, and polymethylmethacrylate.

11. A method for manufacturing an all-solid-state battery, the method
comprising:
forming a first active material region on a metal substrate;
forming a second active material region, and a third active material region on the first active material region, wherein the second and third active material regions are arranged side by side in a width direction of the metal substrate;
forming a positive electrode sheet by drying the first, second, and third active material regions, wherein at least one of the first, second, and third active material region comprises a positive electrode active material, a solid electrolyte, and a binder; and
forming a positive electrode composite layer by cutting the positive electrode sheet;
wherein the positive electrode sheet comprises a first non-coated region formed on one side thereof, and the second active material region is adjacent to the first non-coated region in the width direction,
wherein the positive electrode composite layer comprises an electrode tab formed by cutting the first non-coated region, a first positive electrode active material layer including the first active material region, and a second positive electrode active material layer including the second and third active material regions,
wherein a binder content of the second active material region is less than a binder content of the first active material region, and a binder content of the third active material region is less than the binder content of the second active material region.

12. The method as claimed in claim 11,
wherein the binder content of the first active material region is in a range of ≥ 1 wt% to ≤ 1.5 wt%.

13. The method as claimed in claim 11 or 12,
wherein the binder content of the second active material region is in a range of ≥ 0.7 wt% to ≤ 0.9 wt%, and the binder content of the third active material region is in a range of ≥ 0.4 wt% to ≤ 0.6 wt%.

14. The method as claimed in any of the claims 11 to 13,
wherein a thickness of the first positive electrode active material layer is smaller than a thickness of the second positive electrode active material layer.

15. The method as claimed in any of the claims 11 to 14,
wherein the second active material region occupies ≥ 10% to ≤ 40% of the total area of the second positive electrode active material layer.
